# EUROPÄISCHE PATENTSCHRIFT

(11) **EP 2 925 478 B1**
(45) Veröffentlichungstag und Bekanntmachung des Hinweises auf die Patenterteilung: **22.02.2017**
(21) Anmeldenummer: 13799055.2
(22) Anmeldetag: 03.12.2013
(51) Int. Cl.: B23K 20/10, B06B 1/02, H01R 4/02, H01R 43/02

(54) **ULTRASCHALLSCHWEISSVORRICHTUNG SOWIE VERFAHREN ZUM VERSCHWEISSEN VON ELEKTRISCHEN LEITERN UNTER VERWENDUNG VON DIE SONOTRODE AUFWEISENDEN ERHEBUNGEN UND DIE GEGENELEKTRODE AUFWEISENDEN AUSSPARUNGEN**
ULTRASOUND WELDING DEVICE AND METHOD FOR WELDING ELECTRICAL CONDUCTORS
DISPOSITIF DE SOUDAGE PAR ULTRASONS ET PROCÉDÉ DE SOUDAGE DE CONDUCTEURS ÉLECTRIQUES

(30) Priorität: 03.12.2012 DE 102012111734
(43) Veröffentlichungstag der Anmeldung: 07.10.2015
(73) Patentinhaber: Schunk Sonosystems GmbH, 35435 Wettenberg (DE)
(72) Erfinder: WAGNER, Peter, 35435 Wettenberg (DE); STROH, Dieter, 35435 Wettenberg (DE); KOC, Sinan, 35325 Mücke (DE)
(74) Vertreter: Stoffregen, Hans-Herbert
(86) Internationale Anmeldenummer: PCT/EP2013/075295
(87) Internationale Veröffentlichungsnummer: WO 2014/086733

(56) Entgegenhaltungen:
- DE-A1-102005 004 899
- JP-A- 2004 220 933
- JP-A- 2010 201 481
- JP-A- 2012 152 792
- US-A1- 2006 169 388

## Beschreibung

Die Erfindung bezieht sich auf eine Ultraschallschweißvorrichtung zum Verschweißen von elektrischen Leitern, wie Litzen, zur Herstellung eines Knotens zwischen den Leitern, und ein Verfahren zum Verschweißen von elektrischen Leitern wie Litzen gemäß dem Oberbegriff der Ansprüche 1 und 8 (siehe, z. B. EP 1 853 404 B1).

Mittels Ultraschall können sowohl Kunststoffe als auch Metalle geschweißt werden. Dabei werden beim Ultraschallschweißen von Metallen die mechanischen Schwingungen parallel zur Fügefläche ausgerichtet. Es kommt zu einer komplexen Beziehung zwischen statischer Kraft, den oszillierenden Scherkräften und einem moderaten Temperaturanstieg in der Schweißzone. Hierzu werden die Werkstücke zwischen der schwingenden Sonotrode und einer statischen ggfs. zu der Sonotrode verstellbaren Gegenelektrode angeordnet, die mehrteilig ausgebildet sein kann, um mit der Sonotrode, d. h. Arbeitsfläche deren Kopfes einen Verdichtungsraum zu begrenzen. Dieser kann nach den Lehren der EP 0 143 936 B1 (US 4 596 352 A1) oder der DE 35 08 122 C2 in zwei senkrecht zueinander verlaufenden Richtungen, insbesondere Höhe und Breite verstellbar ausgebildet sein. Hierdurch ergibt sich ein Anpassen an Querschnitte von zum Beispiel zu verschweißenden Leitern.

In dem bekannten einen im Wesentlichen rechteckigen Querschnitt aufweisenden Verdichtungsraum werden die den Verdichtungsraum in seinen offenen Seiten durchsetzenden Litzen mittels Ultraschall zu Durchgangs- oder Endknoten verschweißt.

Um sicherzugehen, dass die Litzen über die gesamte Länge des Verdichtungsraums verschweißt werden, wird zur Verstärkung der Verschweißung in den Auslaufbereichen des Verdichtungsraums, also im Bereich der offenen Seiten, in der Arbeitsfläche der Gegenelektrode, die auch als Amboss bezeichnet wird, eine einem Wellenabschnitt folgende Erhebung ausgebildet, die sich in Richtung der Sonotrode, also deren Arbeitsfläche, erstreckt. Die entsprechende jeweilige Erhebung hat im Schnitt grundsätzlich eine Bogengeometrie und kann dem Verlauf eines Abschnitts einer Sinuskurve folgen. Nachteilig ist, dass die im Bereich der Erhebung sonotrodenseitig verlaufenden Leiter, also diejenigen, die sich im Kontakt mit der in Längsrichtung der Leiter schwingenden Arbeitsfläche der Sonotrode befinden, stark belastet werden, so dass dies gegebenenfalls im Ergebnis zu einem als Schlechtschweißung zu bewertenden Knoten führt.

Bei bekannten Anordnungen ist des Weiteren vorgesehen, dass die Arbeitsfläche der Gegenelektrode im Mittenbereich einen über die ansonsten in der Arbeitsfläche vorhandende Struktur vorstehenden Vorsprung aufweist, um im Mittenbereich eine verstärkte Schweißung durchzuführen. Die sich über die gesamte Breite der Arbeitsfläche erstreckende Erhebung ist jedoch dann von Nachteil, wenn Leiter zu Knoten mit Querschnitten von 0,2 mm² bis 1,5 mm² geschweißt werden, da in diesem Fall der vorstehende Vorsprung schneidend wirken kann mit der Folge, dass der Knoten brechen kann.

Die US 2006/0169388 A1 bezieht sich auf eine Ultraschallschweißvorrichtung, mit der folienenartige Elektroden verschweißt werden. Die Ultraschallschweißvorrichtung umfasst einen Amboss sowie einen Sonotrodenkopf, ohne dass seitliche Begrenzungselemente vorhanden sind. Um die Materialbeanspruchungen auf die zu verschweißenden Bauteile, insbesondere die aus Aluminium bestehenden Elektroden zu reduzieren, ist vorgesehen, dass die Erhebungen aufweisenden Schweißflächen von Amboss und Sonotrodenkopf im peripheren Bereich eine geringere Höhe als im mittleren Bereich aufweisen, wobei die Vorsprünge von Amboss und Sontrodenkopf gleich sind.

Der vorliegenden Erfindung liegt die Aufgabe zugrunde, eine Ultraschallschweißvorrichtung sowie ein Verfahren zum Verschweißen von insbesondere Litzen so weiterzubilden, dass über die gesamte Länge der im Verdichtungsraum verlaufenden Leiter ein Knoten hoher Festigkeit zur Verfügung steht, ohne dass unerwünschte Belastungen auftreten, sei es im Bereich der Knotenenden, sei es beim Verschweißen von Leitern zu Knoten geringen Querschnitts bzw. geringer Breite.

Zu Lösung eines der Aspekte sieht die Erfindung vor, dass die Arbeitsfläche der Sonotrode in ihrem in Projektion der Erhebung der Gegenelektrode in Richtung der von der Arbeitsfläche der Sonotrode aufgespannten Ebene verlaufenden Bereich zumindest eine zumindest abschnittsweise entlang der Erhebung verlaufende Aussparung aufweist, siehe Anspruch 1.
14. Dezember 2015/ 55231 geänderte Beschreibungsseiten 2, 3 ,6 , 8, 12 Erfindungsgemäß ist vorgesehen, dass gegenüber der im Bereich des Auslaufbereichs, also der offenen Seite des Verdichtungsraums verlaufenden Erhebung der AmbossArbeitsfläche in der Sonotrodenarbeitsfläche eine Vertiefung ausgebildet wird, die sich entlang der Erhebung erstreckt. Die Projektion der Erhebung der Gegenelektrode in Richtung der Sonotrode sollte beim Schweißen dabei die Aussparung abdecken. Befinden sich zwischen den Arbeits- bzw. Schweißflächen von Amboss und Sonotrode keine Litzen, so deckt die Erhebung - auch als Vorsprung, insbesondere gewölbter Vorsprung zu bezeichnen - die Aussparung ab. Dadurch, dass im Bereich der Aussparung ein unmittelbarer Kontakt der Leiter mit der Sonotrodenarbeitsfläche unterbleibt, wird die Einleitung von Schwingungsenergie verringert mit der Folge, dass die Belastung reduziert wird. Ungeachtet dessen erfolgt jedoch die gewünschte Verschweißung im Bereich der ambossseitig verlaufenden Leiter, zumal durch die Erhebungen eine Verstärkung der Schweißung der ambossseitig verlaufenden Litzen erfolgt.

Aufgrund der erfindungsgemäßen Lehre wird zum einen durch die Erhebung sichergestellt, dass die in diesem Bereich aufliegenden Leiter gut verschweißt sind, so dass ein Knoten bis zu dessen Auslauf die erforderliche Festigkeit aufweist. Gleichzeitig werden die Litzen bzw. deren Adern, die gegenüberliegend zu der Erhebung der Gegenelektrode entlang der Sonotrode verlaufen, durch die Ausnehmung geschont.

Insbesondere ist vorgesehen, dass die Aussparung derart ausgebildet ist, dass zumindest eine quer zur Längsachse des Verdichtungsraums verlaufende Begrenzung der Aussparung als Wanderschutz gegen ein axiales Verstellen von an der Begrenzung anliegenden Leitern wirkt.

Die Aussparung hat somit eine Doppelfunktion, nämlich die des Schonens der nach dem Stand der Technik im Bereich der Sonotrode am stärksten beanspruchten Leitern und zum anderen ein Verhindern eines Wanderns der Leiter in deren Längsrichtung.

Insbesondere ist vorgesehen, dass jede der Seitenbegrenzungen der Aussparung als Wanderschutz wirkt.

Bevorzugterweise weist die Aussparung eine im Schnitt U-, halbkreis- oder V-förmige Geometrie auf.

Ist bevorzugterweise einer jeden Erhebung, die im Auslaufbereich des Verdichtungsraums von der Ambossarbeitsfläche ausgehend und quer zur Längsachse des Verdichtungsraums verläuft, eine Ausnehmung zugeordnet, so besteht auch die Möglichkeit, dass im Bereich der Projektion der Erhebung zumindest zwei entlang der Erhebung verlaufende Aussparungen vorgesehen sind.

Ist einer Erhebung nur eine Aussparung zugeordnet, so sollten diese zu der Erhebung derart ausgerichtet sein, dass die Aussparung beim Schweißen der Leiter entlang des Mittenbereichs der Erhebung verläuft.

Eine weitere Ausführungsbeispiel der erfindungsgemäß definierten Ultraschallschweißvorrichtung ist in Anspruch 8 definiert.

Aufgrund der erfindungsgemäßen Lehre besteht die Möglichkeit, mit ein und derselben Ultraschallschweißvorrichtung Leiter bzw. Litzen unterschiedlicher Querschnitte zu verschweißen, ohne dass bei Leitern geringer Querschnitte bzw. Knoten geringer Breite die Gefahr besteht, dass der von der Arbeitsfläche des Amboss vorstehende Vorsprung eine Kerbwirkung auf die Litzen derart ausübt, dass ein Brechen möglich ist. Insbesondere ist vorgesehen, dass die Länge L beträgt 0,5 mm ≤ L ≤ 1,5mm, insbesondere L ≈ 1 mm.

Ein Verfahren der eingangs genannten Art zeichnet dadurch aus, dass gegenüberliegend zu der Erhebung der Gegenelektrode und auf der Sonotrode aufliegende oder in diesem Bereich verlaufende Leiter im Vergleich zur zumindest im Mittenbereich des Verdichtungsraums erfolgten Verschweißung weniger stark verschweißt und gegen ein axiales Bewegen zumindest gehemmt werden dadurch, dass in Projektion der Erhebung in Richtung auf die Arbeitsfläche der Sonotrode zumindest abschnittsweise in der Arbeitsfläche der Sonotrode und entlang der Erhebung verlaufend eine Aussparung ausgebildet wird, wobei zumindest eine der quer zur Längsachse des Verdichtungsraums verlaufenden Begrenzungen das axiale Bewegen zumindest der auf der Begrenzung aufliegenden Leiter zumindest hemmt, siehe Anspruch 10.

Erfindungsgemäß erfolgt ein Verschweißen von Leitern zu Knoten - sei es Endknoten sei es Durchgangsknoten - derart, dass auch ambossseitig die erforderliche Schweißung der Leiter in den Auslaufbereichen des Verdichtungsraums erfolgt, gleichzeitig in den Bereichen der Sonotrode die Leiter "geschont" werden, in denen nach dem Stand der Technik verstärkt Schwingungsenergie eingeleitet wird, nämlich in denjenigen, in denen in den Auslaufbereichen des Verdichtungsraums und über der Arbeitsfläche der Gegenelektrode vorstehende im Schnitt bogenförmige Vorsprünge verlaufen. Gleichzeitig wirkt die Aussparung als Wanderschutz derart, dass das Wechselwirken der Leiter mit zumindest einer der Begrenzungen der Aussparung, die quer zur Längsachse des Verdichtungsraums verläuft, ein axiales Verschieben der Leiter unterbunden bzw. zumindest gehemmt wird.
14. Dezember 2015/ 55231 geänderte Beschreibungsseiten 2, 3 ,6, 8, 12 ein weiteres Ausführungsbeispiel des erfindungsgemäß definierten Verfahrens ist in Anspruch 11 definiert.

Es besteht folglich die Möglichkeit, dieselben Begrenzungselemente eines Verdichtungsraums für Leiter unterschiedlicher Querschnitte zu benutzen, ohne dass bei kleinen Querschnitten die Gefahr besteht, dass der für große Querschnitte benötigte im Mittenbereich der Arbeitsfläche der Sonotrode vorstehende Vorsprung das Schweißergebnis durch Einkerben des Vorsprungs in die Leiter beeinträchtigt. Vielmehr wird bei kleinen Querschnitten der Verdichtungsraum in seiner Breite derart ausgelegt, dass der im Mittenbereich verlaufende Vorsprung außerhalb des Verdichtungsraums verläuft.

Selbstverständlich wird die Erfindung nicht verlassen, wenn die Arbeitsfläche des Amboss eine andere als die zuvor beschriebene Struktur oder nur den im Mittenbereich verlaufenden Vorsprung aufweist, der erfindungsgemäß höhenmäßig verkürzt wird. Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallschweißvorrichtung,
- Fig. 2a: einen Ausschnitt eines Verdichtungsraums der Ultraschallschweißvorrichtung gemäß Fig. 1 im Schnitt,
- Fig. 2b, c: Details des Ausschnitts gemäß Fig. 2a,
- Fig. 3: eine perspektivische Darstellung eines Ausschnitts einer prinzipiell der Fig. 1 entsprechenden Ultraschallschweißvorrichtung,
- Fig. 4a, b: gegenelektrodenseitige Ansichten von Litzenknoten,
- Fig. 5: einen Ausschnitt von Amboss und Sonotrode nach dem Stand der Technik und
- Fig. 6: einen der Fig. 5 entsprechenden Ausschnitt von Amboss und Sonotrode nach der Erfindung.

Die Erfindung wird nachstehend anhand prinzipieller Darstellungen erläutert, wobei grundsätzlich für gleiche Elemente gleiche Bezugszeichen verwendet werden.

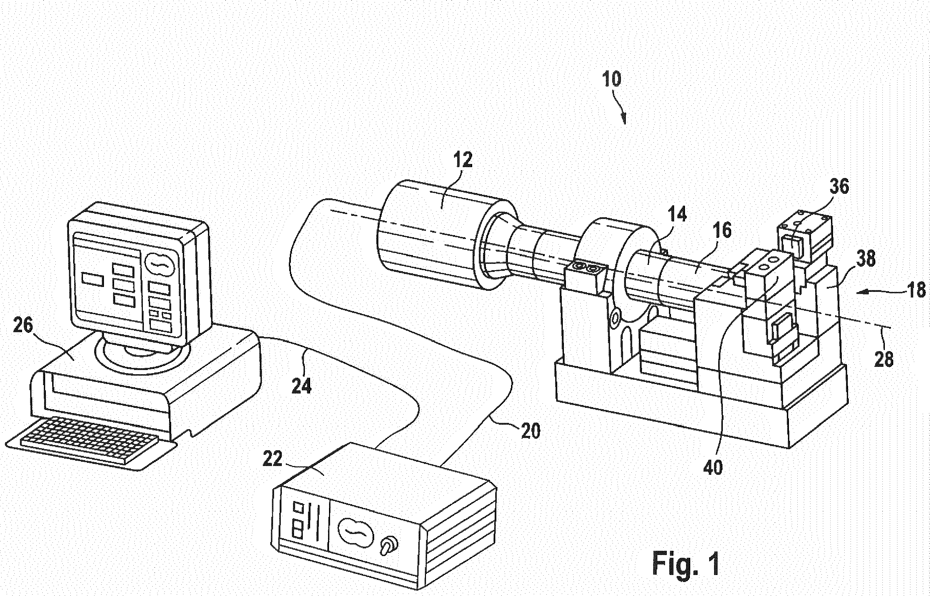

In Fig. 1 ist rein prinzipiell eine Ultraschallschweißvorrichtung dargestellt, mittels der Metallteile in Form von Litzen miteinander verschweißt werden sollen. Die Ultraschallschweißvorrichtung umfasst einen Schwinger 10, der im Ausführungsbeispiel aus einem Konverter 12, einem Booster 14 und einer Sonotrode 16 besteht. Die Sonotrode 16 begrenzt dabei einen nachstehend näher zu erläuternden Verdichtungsraum 18. Ein grundsätzlicher Aufbau eines entsprechenden Verdichtungsraums ist zum Beispiel der US 4,869,419 A1 zu entnehmen.

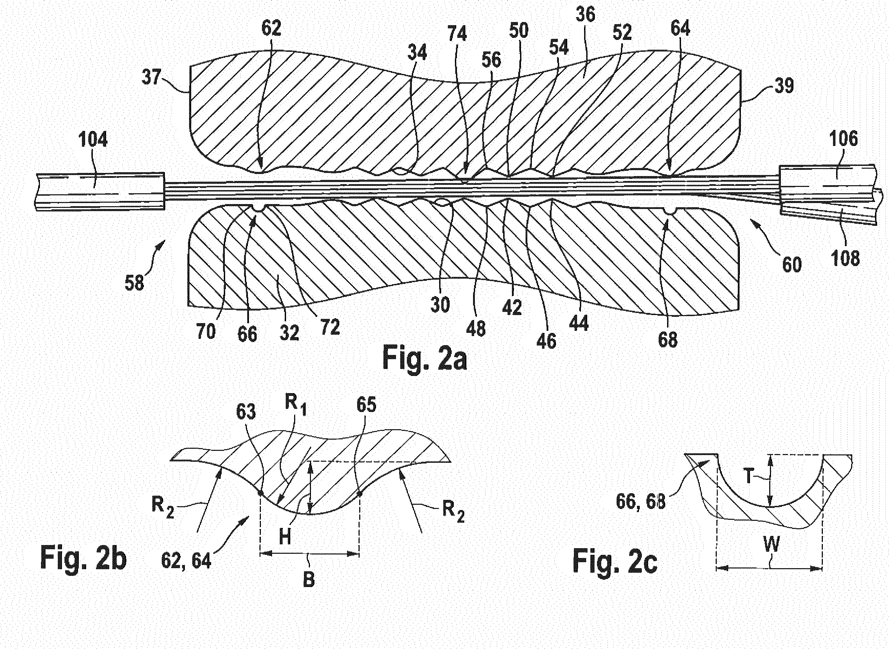

In der Darstellung nach der Fig. 2a schwingt die Sonotrode 16 und damit der Sonotrodenkopf 32 horizontal in der Zeichenebene und parallel zur Längskante des Zeichnungsblatts. Eine der Sonotrode 16 zugeordnete Gegenelektrode - nachstehend auch Amboss 36 genannt - ist senkrecht zur Zeichenebene und relativ zu der Sonotrode 16 verstellbar.

Bekannterweise ist der Konverter 12 über eine Leitung 20 mit einem Generator 22 verbunden, der seinerseits über eine Leitung 24 an einen Rechner 26 angeschlossen ist, über den der Generator 22 gesteuert wird, um sodann über den Konverter 12 elektrische in mechanische Schwingungen über zum Beispiel Piezoelemente umzuwandeln, wobei die Schwingungen über den Booster 14 verstärkt werden, um sodann entsprechend die Sonotrode 16 zu erregen.

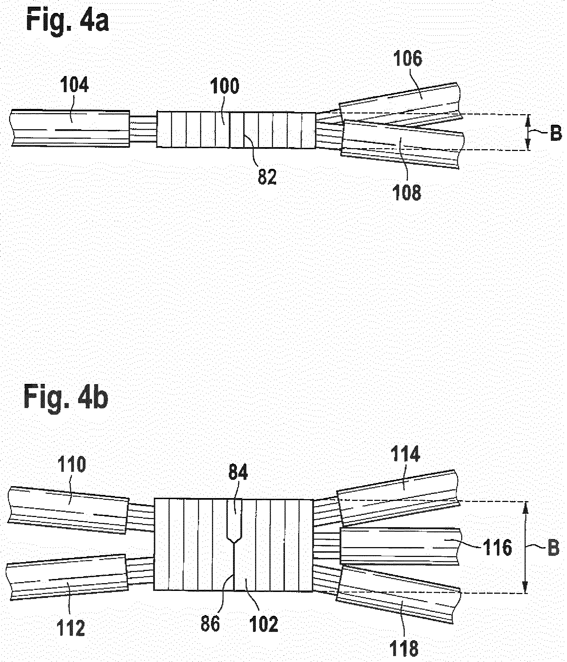

Der Verdichtungsraum 18 weist im Querschnitt eine Rechteckgeometrie auf und ist stirnseitig offen. Durch die Stirnseiten hindurch werden Litzen in den Verdichtungsraum eingeführt, um diese zu einem Knoten zu verschweißen, wie diese beispielhaft der Fig. 4 zu entnehmen und mit dem Bezugszeichen 100, 102 gekennzeichnet sind. Der Verdichtungsraum 18, der in Längsrichtung der Sonotrodenachse 28 und somit in Schwingungsrichtung der Sonotrode 16 und in axialer Richtung von in den Verdichtungsraum 18 einzubringenden Litzen 104, 106, 108, 110, 112, 114, 116, 118 verläuft, wird auf gegenüberliegenden Seiten zum einen von einer Arbeitsfläche 30 der Sonotrode 16 bzw. deren Sonotrodenkopf 32 und zum anderen von einer Arbeitsfläche 34 der Gegenelektrode oder des Ambosses 36 begrenzt. Von einem senkrecht zu den Arbeitsflächen 30, 34 verstellbaren Träger 38 geht der Amboss 36 aus, der parallel zu der Arbeits- oder Schweißfläche 30 der Sonotrode 16 bzw. dem Sonotrodenkopf 32 verschiebbar ist. Insoweit wird auf bekannte Konstruktionen verwiesen.

Um beim Schweißen der Litzen 104, 106, 108 bzw. 110, 112, 14, 116, 118 bzw. deren Adern ein Wandern bei erregter Sonotrode 16 zu unterbinden, weisen die Arbeitsflächen 30, 34 eine wellen- oder sägezahnförmige Struktur auf, wobei sich entsprechend der Schnittdarstellung gemäß Fig. 2a Erhebungen 42, 44, und Aussparungen bzw. Vertiefungen oder Gräben 46, 48 der Arbeitsfläche 30 des Sonotrodenkopfs 32 bzw. Erhebungen 50, 52 und Vertiefungen oder Gräben 54, 56 des Ambosses 36 abwechseln. Die hierdurch gebildete Struktur verläuft senkrecht zu den Längsachsen der Litzen 104, 106, 108, 110, 112, 114, 116, 118 und damit senkrecht zur Längsachse des Verdichtungsraums 18 und damit der Sonotrode 16.

Um auch in den Auslaufbereichen 58, 60 des Verdichtungsraums 18, also in den senkrecht zur Längsachse 28 verlaufenden Randbereichen der Arbeitsflächen 30, 34 ambossseitig verlaufende Litzen 104, 106, 108 bzw. deren Adern im erforderlichen Umfang zu verschweißen und somit die gewünschte Festigkeit sicherzustellen, erstrecken sich in den quer zur Längsachse des Verdichtungsraums 18 verlaufenden Längsrandbereichen, also in den Auslaufbereichen 58, 60 im Schnitt bogenförmig und in Richtung der Sonotrode 16 bzw. des Sonotrodenkopfs 32 vorstehende Erhebungen 62, 64, so dass die Litzen 104, 106, 108 zum jeweiligen Knotenauslauf hin, also bis zum Randbereich des Verdichtungsraums 18 im erforderlichen Umfang verschweißt werden. Diese auch als Wellen zu bezeichnenden Vorsprünge 62, 64 gehören zum Stand der Technik.

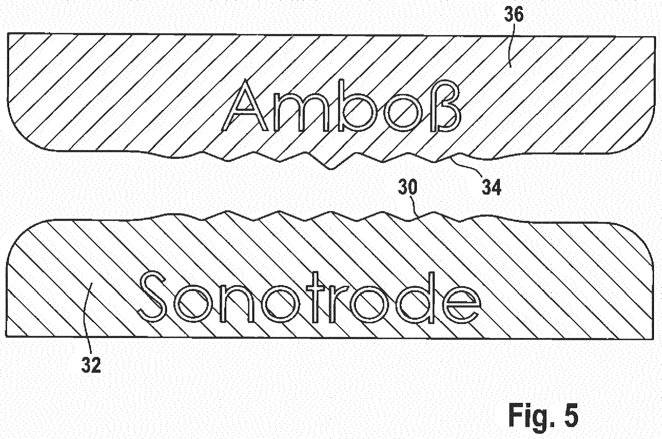

Der Fig. 5 ist ein Schnitt eines Verdichtungsraums im Bereich von Amboss und Sonotroden zu entnehmen, die dem Stand der Technik entspricht. Man erkennt die im Schnitt sägeartige Strukturierung der Arbeitsflächen 30, 34 von Amboss 36 und Sonotrodenkopf 32. Im Auslaufbereich ist in der Darstellung der Fig. 5 sowohl die Arbeitsfläche 34 des Ambosses 36 als auch die des Sonotrodenkopfs 32 eben ausgebildet. Es ergeben sich jedoch auch Geometrien, bei denen in der Ambossfläche im Auslaufbereich ein Abschnitt mit einer Erhebung versehen ist, wie diese der Fig. 2a zu entnehmen und mit den Bezugszeichen 62, 64 gekennzeichnet ist. Nach dem Stand der Technik weist die den Erhebungen gegenüberliegende Fläche des Sonotrodenkopfs 32 ebenfalls Erhebungen auf. Hierdurch werden die entlang der Arbeitsfläche des Sonotrodenkopfs 32 verlaufenden Litzen stark beansprucht.

Um auf der gegenüberliegenden Seite, also der Arbeitsfläche 30 des Sonotrodenkopfs 32 die aufgrund der Vorsprünge 62, 64 stark beanspruchten Litzen 104, 106 , 108 zu schonen, verläuft im Bereich der Vorsprünge 62, 64 des Ambosses 36 und gegenüberliegend zu diesem in der Arbeits- oder Schweißfläche 30 der Sonotrode 16 bzw. des Sonotrodenkopfs 32 jeweils zumindest eine Vertiefung 66, 68, die im Schnitt eine Halbkreis-, U- oder V-förmige -Geometrie aufweisen kann. In der zeichnerischen Darstellung der Fig. 2a, 2c ist eine Halbkreis-Geometrie gewählt. Die Aussparungen 66, 68 verlaufen in der Projektion der Vorsprünge 62, 64 in Richtung der Arbeitsfläche 30 des Sonotrodenkopfs 32. Insoweit sind die Zeichnungen selbsterklärend.

Ist in der zeichnerischen Darstellung einem Vorsprung 62, 64 des Ambosses 36 nur eine entlang von diesem verlaufende Aussparung 66, 68 in der Arbeitsfläche 30 des Sonotrodenkopfs 32 zugeordnet, so können auch mehrere entsprechende Aussparungen in der Arbeits- oder Schweißfläche 30 des Sonotrodenkopfs 32 vorgesehen sein. Gegebenenfalls ist es auch möglich, dass nur einem der Vorsprünge 62, 64 eine entsprechende Aussparung 66, 68 zugeordnet ist.

Durch die Aussparungen 66, 68 oder Vertiefungen werden die ansonsten aufgrund der Vorsprünge 62, 64 am stärksten beanspruchten Bereiche der Litzen 104, 106, 108 geschont.

Zu den in den Auslaufbereichen 58, 60 verlaufenden Erhebungen 62, 64 in der Arbeitsfläche 34 des Amboss 36 ist Folgendes zu bemerken. Wie die vergrößerte Darstellung der Erhebung 64 in Fig. 2b verdeutlicht, weist die Erhebung 62, 64 eine Höhe H gegenüber den unmittelbar angrenzenden tiefsten Bereichen in der Arbeitsfläche 34 auf, die zwischen 0,2 mm und 2 mm liegt. Die Breite B der Erhebung liegt zwischen 0,2 mm und 2 mm, und zwar zwischen den Wendepunkten 63 und 65, also dem Übergang der Erhebung 62, 64 zu dem jeweils angrenzenden Tal, das gleichfalls durch einen Kurvenabschnitt begrenzt ist. Der Abstand B ergibt sich folglich aus dem Übergang des Radius R₁ der Erhebung 62, 64 zu den Radien R₂ der angrenzenden Täler. Der Radius R₁ der Erhebung 62, 64 liegt vorzugsweise zwischen 0,1 mm und 1 mm. Die Radien R₂ der angrenzenden Täler sollten zwischen 0,1 mm und 1,5 mm liegen.

In Fig. 2c ist in vergrößerter Darstellung rein prinzipiell die Aussparung 66, 68 - auch Vertiefung genannt - dargestellt. Diese weist eine Tiefe T zwischen 0,02 mm und 0,2 mm auf. Die Breite oder Weite W der Vertiefung 66, 68 beläuft sich zwischen 0,2 mm und 2 mm.

Auch wenn die Erhebung 62, 64 und die Aussparung oder Vertiefung 66, 68 gleiche Abmessungen aufweisen können, ist bevorzugterweise vorgesehen, dass die Abmessung der Erhebung 62, 64 auf die der Aussparung 66, 68 derart angepasst ist, dass die Projektion der Erhebung 62, 64 in Richtung der Arbeitsfläche 30 der Sonotrode 32 in Längsrichtung des Verdichtungsraums, also der Längsachse 28 der Sonotrode 16 größer als die Breite bzw. Weite W der Aussparung 66, 68 ist.

Der Abstand der Erhebung bzw. des Vorsprungs 62, 64 von senkrecht zur Längsachse des Verdichtungsraums verlaufenden Stirnflächen 37, 39 des Amboss sollte im Bereich zwischen 1 mm und 3 mm liegen.

Unabhängig hiervon kann durch die Aussparungen 66, 68 ein weiterer Vorteil erzielt werden. So wirken die die Aussparungen 66, 68 begrenzenden Ränder, von denen die der Aussparung 66 mit den Bezugszeichen 70, 72 versehen sind, quasi als Bremse gegen ein axiales Verschieben der Litzen 104, 106, 108 bzw. deren Adern, die auf der Arbeitsfläche 30 aufliegen. Mit anderen Worten wird ein Wanderschutz geboten. Es wird ein axialer Halt gegeben, ohne dass die Adern eingeschnürt bzw. abgeschert werden.

Nach dem Stand der Technik ist es bekannt, die Struktur der Arbeitsfläche 34 des Amboss 36 derart zu gestalten, dass im Mittenbereich ein Vorsprung 74 vorgesehen ist, der über einer von den anderen Vorsprüngen der Arbeitsfläche 34 aufgespannten Ebene vorsteht, also diese überragt, wie prinzipiell der Fig. 2a zu entnehmen ist.

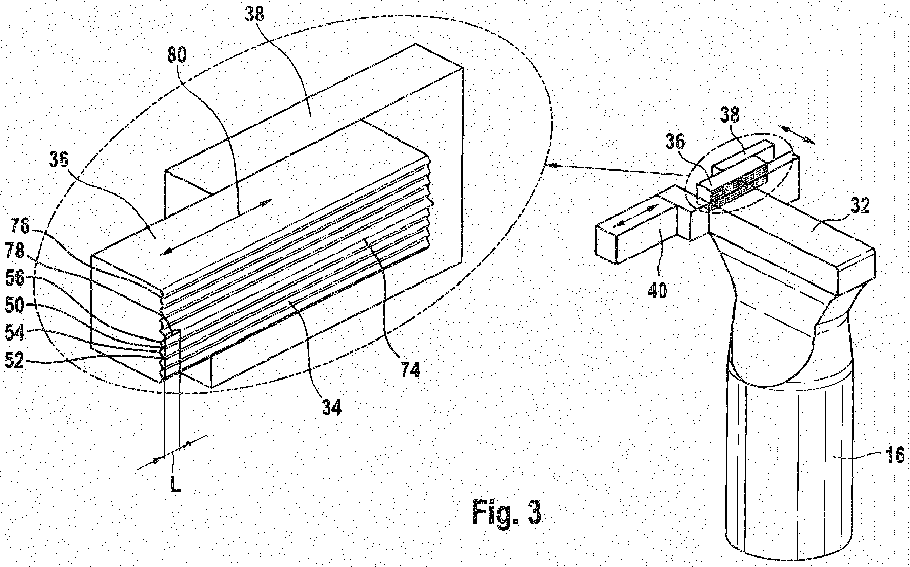

Um ungeachtet dessen in dem Verdichtungsraum 18 Litzen 104, 106, 108 kleiner Querschnitte zu verschweißen, also insbesondere Litzen, die zu Knoten verschweißt werden, deren Breite kleiner als 1 mm ist, ohne dass der Vorsprung 74 zu einem Einkerben und damit der Gefahr eines Brechens des Knotens 100 führen kann, ist erfindungsgemäß vorgesehen, dass der Vorsprung 74, ausgehend von seinem Rand 76, abgeplattet oder abgetragen oder als eine entsprechend kürzere Erhebung in der Arbeitsfläche 34 ausgebildet wird, wie dies prinzipiell der Fig. 3 zu entnehmen ist.

Der abgeflachte Bereich des Vorsprungs 74 ist mit dem Bezugszeichen 78 gekennzeichnet und weist quer bzw. senkrecht zur Längsachse 28 des Verdichtungsraums 18 eine Länge zwischen 0,5 mm und 1, 5 mm auf, insbesondere im Bereich von 1 mm. Hierdurch besteht die Möglichkeit, Knoten mit Breiten bis 1,5 mm zu schweißen, ohne dass der Vorsprung 74 einwirkt und somit eine Kerbwirkung ausüben kann.

Der Bereich 78, in dem die Erhebung 74 in ihrer Höhe kleiner als im verbleibenden Bereich ist, weist quasi ein Plateau bzw. eine Scheitelfläche auf, das bzw. die sich entlang, vorzugsweise parallel zu der von der Arbeitsfläche 34 des Amboss 36 aufgespannten Ebene erstreckt.

Aus den "Amboss-Ansichten" der Fig. 4a, 4b der Knoten 100, 102 wird erkennbar, dass dann, wenn ein Knoten - im vorliegenden Fall der Knoten 100 - in dem Verdichtungsraums 18 geschweißt wird, bei dem der Vorsprung 74 aufgrund des Zurückziehens des Amboss 36 (Pfeil 80) außerhalb des Verdichtungsraums 18 verläuft, ein dem abgetragenen Bereich 78 entsprechender Bereich 82 eingeprägt ist. Bei breiteren Knoten, bei denen der Vorsprung 74 mitwirkt, ergibt sich ein entsprechender abgeflachter Bereich 84, der sodann in eine Vertiefung 86 übergeht, die durch den Vorsprung 74 eingeprägt wird. Dies wird durch die Darstellung des Knotens 102 erkennbar.

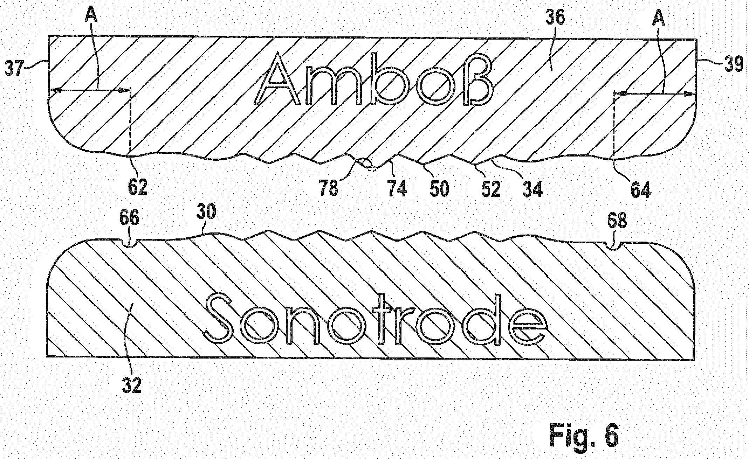

Der Fig. 6 ist ein der Fig. 5 entsprechender Ausschnitt von Amboss 36 und Sonotrodenkopf 32 zu entnehmen, wobei sowohl der Amboss 36 als auch der Sonotrodenkopf 32 entsprechend der erfindungsgemäßen Lehre gestaltet sind. Man erkennt deutlich die den Erhebungen 62, 64 in der Arbeitsfläche 34 des Amboss 36 zugeordneten rinnenförmigen Vertiefungen 66, 68 in der Arbeitsfläche 30 des Sonotrodenkopfs 32. Ferner wird ersichtlich, dass der im Mittenbereich verlaufende Vorsprung bzw. die Erhebung 74 der Arbeitsfläche 34 des Amboss 36, die über den anderen Erhebungen oder Vorsprüngen 50, 52 vorsteht, bereichsweise abgeplattet ist, so dass ein zurückversetzter von einem Plateau 78 bzw. einer Abplattung gebildeter Bereich zur Verfügung steht, der mit Litzen geringen Querschnitts wechselwirkt, die zu Knoten geringerer Breite verschweißt werden, wie dies anhand der Fig. 4a, 4b erläutert worden ist.

Die erfindungsgemäßen Dimensionierungen der Arbeitsflächen von Gegenelektrode und Sonotrode können für jedwede Ultraschallvorrichtungen verwendet werden, insbesondere solche, die umfangsseitig vollständig profiliert sind, wie dies der EP 1 853 404 B1 zu entnehmen ist. Gleiches gilt für einen Einsatz bei einer Sonotrode entsprechend der EP 1 680 254 B1. Insoweit wird auf die entsprechenden Offenbarungen ausdrücklich Bezug genommen.

## Patentansprüche

1. Ultraschallschweißvorrichtung zum Verschweißen von elektrischen Leitern (104, 106, 110, 112, 114, 116, 118), wie Litzen, zur Herstellung eines Knotens (100, 102), umfassend einen Verdichtungsraum (18) zur Aufnahme der Leiter, der umfangsseitig durch zwei den Verdichtungsraum auf gegenüberliegenden Seiten begrenzenden Arbeitsflächen (30, 34) und zwei quer zu den Arbeitsflächen verlaufende Seitenbegrenzungsflächen begrenzt ist und bei dem die verbleibenden Seiten offen sind, wobei eine der Arbeitsflächen ein Abschnitt einer in Ultraschallschwingungen erregbaren Sonotrode (16) der Ultraschallschweißvorrichtung und die andere Arbeitsfläche ein Abschnitt einer Gegenelektrode (36) ist und zumindest die Arbeitsflächen strukturiert sind, wobei in zumindest einem, vorzugsweise in beiden Auslaufbereichen (58, 60) des Verdichtungsraums die Arbeitsfläche der Gegenelektrode eine quer zur die offenen Seiten durchsetzenden Längsachse (28) des Verdichtungsraums verlaufende im Schnitt bogenförmige und sich in Richtung der Arbeitsfläche der Sonotrode erstreckende Erhebung (62, 64) aufweist,
**dadurch gekennzeichnet,**
**dass** die Arbeitsfläche (30) der Sonotrode (16) in ihrem in Projektion der Erhebung (62, 64) der Gegenelektrode (36) senkrecht zur von der Arbeitsfläche der Sonotrode aufgespannten Ebene verlaufenden Bereich zumindest eine zumindest abschnittsweise entlang der Erhebung verlaufende Aussparung (66, 68) aufweist.

2. Vorrichtung nach Anspruch 1,
**dadurch gekennzeichnet,**
**dass** zumindest eine quer zur Längsachse (28) des Verdichtungsraums (18) verlaufende Begrenzung (70, 72) der Aussparung (66, 68) als Wanderschutz gegen ein axiales Verstellen von an der Begrenzung anliegenden Leitern (104, 106, 110, 112, 114, 116, 118) wirkt.

3. Vorrichtung nach Anspruch 1 oder 2,
**dadurch gekennzeichnet,**
**dass** jede der Seitenbegrenzungen (70, 72) der Aussparung (66, 68) als Wanderschutz wirkt.

4. Vorrichtung nach einem der vorhergehenden Ansprüche,
**dadurch gekennzeichnet,**
**dass** die Aussparung (66, 68) eine im Schnitt U-, halbkreis- oder V-förmige Geometrie aufweist.

5. Vorrichtung nach einem der vorhergehenden Ansprüche,
**dadurch gekennzeichnet,**
**dass** im Bereich der Projektion der Erhebung (62, 64) in Richtung der Sonotrode (16) zumindest zwei entlang der Erhebung verlaufende Aussparungen vorgesehen sind.

6. Vorrichtung nach einem der vorhergehenden Ansprüche,
**dadurch gekennzeichnet,**
**dass** die Breite der Erhebung (62, 64) größer als die Breite der Aussparung (66, 68) ist, jeweils betrachtet in Längsachsenrichtung des Verdichtungsraums (18).

7. Vorrichtung nach einem der vorhergehenden Ansprüche,
**dadurch gekennzeichnet,**
**dass** die Aussparung (66, 68) beim Schweißen der Leiter entlang des Mittenbereichs der Erhebung (62, 64) verläuft.

8. Ultraschallschweißvorrichtung nach Anspruch 1, wobei die Arbeitsfläche (34)
der Gegenelektrode (36) von einem parallel zur Arbeitsfläche (30) der Sonotrode (32) verstellbaren Schieber ausgeht, der von einem senkrecht zu der Arbeitsfläche der Sonotrode verstellbaren Träger (38) ausgeht, der mittelbar oder unmittelbar den Verdichtungsraum (18) seitlich begrenzt, und wobei zumindest die Arbeitsfläche der Gegenelektrode eine Struktur aufweist, die vorzugsweise von aufeinanderfolgenden und quer zur Längsachse des Verdichtungsraums verlaufenden Erhebungen (50, 52) und Vertiefungen (54, 56) gebildet ist, wobei im Mittenbereich der Arbeitsfläche der Gegenelektrode zumindest eine Erhebung (74) über den anderen Erhebungen oder bei fehlender Struktur über der Arbeitsfläche in Richtung der Sonotrode vorsteht,
wobei
die zumindest eine im Mittenbereich verlaufende Erhebung (74), ausgehend vom freien in Längsrichtung des Verdichtungsraums verlaufenden Rand der Arbeitsfläche (34) der Gegenelektrode (36), in ihrer Höhe über einen Bereich (78) derart verkürzt ist, dass der Arbeitsfläche (30) der Sonotrode (32) zugewandter Scheitelbereich (75) des Bereichs in oder in etwa einer Ebene oder zurückversetzt zu der Ebene verläuft, die von den weiteren Erhebungen oder bei fehlenden weiteren Erhebungen von der Arbeitsfläche aufgespannt ist, wobei der Bereich eine quer zur Längsachse (28) des Verdichtungsraums verlaufende Länge L aufweist, die kürzer als mögliche Erstreckungen der Arbeitsfläche quer zur Längsachse des Verdichtungsraums ist.

9. Vorrichtung nach Anspruch 8,
**dadurch gekennzeichnet,**
**dass** die Länge L beträgt 0,5 mm ≤ L ≤ 1,5 mm, insbesondere L ≈ 1 mm.

10. Verfahren zum Verschweißen von elektrischen Leitern (104, 106, 110, 112, 114, 116, 118) wie Litzen zu einem Knoten, in einem in Höhe und Breite verstellbaren Verdichtungsraum (18) einer Ultraschallschweißvorrichtung, wobei der Verdichtungsraum umfangsseitig durch zwei den Verdichtungsraum auf gegenüberliegenden Seiten begrenzenden Arbeitsflächen (30, 34) und zwei
14. Dezember 2015/ 55231 geänderte Ansprüche 8 bis 11
quer zu den Arbeitsflächen verlaufenden Seitenbegrenzungsflächen bei verbleibenden offenen Seiten des Verdichtungsraums begrenzt wird, wobei eine Arbeitsfläche Abschnitt einer in Ultraschallschwingungen erregbaren Sonotrode (16, 32) der Ultraschallschweißvorrichtung und die andere Arbeitsfläche Abschnitt einer Gegenelektrode (36) ist und zumindest die Arbeitsflächen strukturiert sind, wobei in zumindest einem Auslaufbereich (58, 60) des Verdichtungsraums von der Arbeitsfläche der Gegenelektrode eine quer zur Längsachse des Verdichtungsraums verlaufende im Schnitt bogenförmige Erhebung (62, 64) abragt, mittels der die Schweißung der Leiter verstärkt wird, die im Bereich der Erhebung verlaufen,
**dadurch gekennzeichnet,**
**dass** gegenüberliegend zu der Erhebung (62, 64) und auf der Sonotrode (16) aufliegend oder in diesem Bereich verlaufende Leiter im Vergleich zur zumindest im Mittenbereich des Verdichtungsraums (18) erfolgten Verschweißung geringer verschweißt und gegen ein axiales Bewegen zumindest gehemmt werden dadurch, dass in Projektion der Erhebung in Richtung auf die Arbeitsfläche (30) der Sonotrode (16, 32) zumindest abschnittsweise in der Arbeitsfläche der Sonotrode und entlang der Erhebung verlaufend eine Aussparung (66, 68) ausgebildet wird, wobei zumindest eine der quer zur Längsachse (28) des Verdichtungsraums verlaufenden Begrenzungen (70, 72) das axiale Bewegen zumindest der auf der Begrenzung aufliegenden Leiter zumindest hemmt.

11. Verfahren nach Anspruch 10 unter Verwendung einer Gegenelektrode (36), deren Arbeitsfläche (34) von einem parallel zur Arbeitsfläche der Sonotrode (16, 32) verstellbaren Schieber ausgeht, der seinerseits von einem senkrecht zu der Arbeitsfläche der Sonotrode verstellbaren Träger (38) ausgeht, durch den mittelbar oder unmittelbar der Verdichtungsraum (18) seitlich begrenzt wird, wobei zumindest die Arbeitsfläche der Gegenlektrode mit einer durch aufeinanderfolgende und quer zur Längsachse des Verdichtungsraums verlaufende Erhebungen (50, 52) und Vertiefungen (54, 56) gebildeten Struktur versehen wird, wobei im Mittenbereich der Arbeitsfläche zumindest eine der Erhebungen (74) über den anderen in Richtung der Sonotrode vorsteht,
wobei
die zumindest eine im Mittenbereich der Arbeitsfläche (34) verlaufende Erhebung (74) ausgehend vom freien in Längsrichtung des Verdichtungsraums verlaufenden Rand der Arbeitsfläche über einen Bereich (78) mit einer Länge L senkrecht zur Längsachse (28) des Verdichtungsraums (18) in ihrer Höhe derart verkürzt wird, dass der Arbeitsfläche der Sonotrode zugewandter Scheitelbereich des verkürzten Bereichs in oder etwa in einer Ebene oder zurückversetzt zu der Ebene verläuft, die von den weiteren Erhebungen (50, 52) aufgespannt wird, und dass in Abhängigkeit vom Querschnitt der zu verschweißenden Leiter (104, 106, 110, 112, 114, 116, 118) entweder maximale Breite des Verdichtungsraums auf die Länge des Bereichs der verkürzten Erhebung eingestellt wird oder eine Breite eingestellt wird, die breiter als die Länge ist.
14. Dezember 2015/ 55231 geänderte Ansprüche 8 bis 11

## Claims

1. An ultrasonic welding device for welding electrical conductors (104, 106, 110 , 112, 114, 116, 118) such as stranded wires for producing a node (100, 102), comprising a compression space (18) for receiving the conductors that is delimited on the circumferential side by two working surfaces (30, 34) delimiting the compression space on opposite sides and by two lateral delimiting surfaces running transversely to the working surface, and in which the remaining sides are open, wherein one of the working surfaces is a section of a sonotrode (16) of the ultrasonic welding device which sonotrode can be excited into ultrasonic oscillations and wherein the other working surface is a section of a counterelectrode (36), and at least the working surfaces are structured, wherein in at least one, preferably in both exit areas (58, 60) of the compression space the working surface of the counterelectrode comprises an elevation (62, 64) which runs transversely to the longitudinal axis (28) of the compression space extending through the open sides, is arc-shaped in section and extends in the direction of the working surface of the sonotrode,
**characterized in that**
the working surface (30) of the sonotrode (16) comprises at least one recess (66, 68) running at least in sections along the elevation in its area running in a projection of the elevation (62, 64) of the counterelectrode (36) vertically to the plane tensioned by the working surface of the sonotrode.

2. The device according to Claim 1,
**characterized in that**
at least one delimitation (70, 02) of the recess (66, 68) running transversely to the longitudinal axis (28) of the compression space (18) acts as a wall protection against an axial shifting of conductors (104, 106, 110, 112, 114, 116, 118) resting on the delimitation.

3. The device according to Claim 1 or 2,
**characterized in that**
each of the lateral delimitations (70, 72) of the recess (66, 68) acts as a wall protection.

4. The device according to one of the previous claims,
**characterized in that**
the recess (66, 68) has a geometry that is U-shaped, semicircular or V-shaped in its section.

5. The device according to one of the previous claims,
**characterized in that**
at least two recesses running along the elevation are provided in the area of the projection of the elevation (62, 64) in the direction of the sonotrode (16).

6. The device according to one of the previous claims,
**characterized in that**
the width of the elevation (62, 64) is greater than the width of the recess (66, 68) viewed in the longitudinal axial direction of the compression space (18).

7. The device according to one of the previous claims,
**characterized in that**
the recess (66, 68) runs during the welding of the conductors along the central area of the elevation (62, 64).

8. An ultrasonic welding device according to Claim 1, wherein the working surface (34) of the counterelectrode (36) starts from a slide that can be adjusted parallel to the working surface (30) of the sonotrode (32), which slide starts from a carrier (38) that can be adjusted vertically to the working surface of the sonotrode and that indirectly or directly laterally delimits the compression space (18), and wherein at least the working surface of the counterelectrode has a structure that is preferably formed by successive elevations (50, 52) and recesses (54, 56) running transversely to the longitudinal axis of the compression space, wherein at least one elevation (74) projects in the central area of the working surface of the compressor above the other elevations or, if there is no structure, over the working surface in the direction of the sonotrode, wherein
the at least one elevation (74) running in the central area and starting from the free edge of the working surface (34) of the counterelectrode (36), which edge runs in the longitudinal direction of the compression space, is shortened in its height over an area (78) in such a manner that the crown area (75) of the area facing the working surface (30) of the sonotrode (32) runs in or approximately in a plane or offset from the plane that is tensioned by the other elevations or, in the case of a lack of other elevations, by the working surface, wherein the area comprises a length L running transversely to the longitudinal axis (28) of the compression space which length is shorter than possible extensions of the working surface transversely to the longitudinal axis of the compression space.

9. The device according to claim 8,
**characterized in that**
the length L is 0.5 mm ≤ L ≤ 1.5 mm, in particular L ≈ 1 mm.

10. A method for welding electrical conductors (104, 106, 110, 112, 114, 116, 118) such as stranded wires to a node in a compression space (18) of an ultrasonic welding device, which compression space can be adjusted in height and in width, wherein the compression space is delimited on the circumferential side by two working surfaces (30, 34) delimiting the compression space on opposite sides and by two lateral delimiting surfaces running transversely to the working surface, and in which the remaining sides of the compression space are open, wherein one working surface is a
section of a sonotrode (16, 32) of the ultrasonic welding device which sonotrode can be excited into ultrasonic oscillations and the other working surface is a section of a counterelectrode (36), and at least the working surfaces are structured, wherein in at least one exit area (58, 60) of the compression space an elevation (62, 64) which runs transversely to the longitudinal axis of the compression space and is arc-shaped in section projects from the working surface of the counterelectrode, by means of which the welding of the conductors is reinforced that run in the area of the elevation, **characterized in that**
that conductors resting opposite the elevation (62, 64) and on the sonotrode (16) or running in this area are less strongly welded in comparison to the welding that took place at least in the central area of the compression space (18) and are at least inhibited from an axial movement **in that** a recess (66, 68) running in the direction of the working surface (30) of the sonotrode (16, 32) at least in sections in the working surface of the sonotrode and along the elevation is formed as a projection of the elevation, wherein at least one of the delimitations (70, 72) running transversely to the longitudinal axis (28) of the compression space at least inhibits the axial movement of the conductors resting at least on the delimitation.

11. A method according to Claim 10, using a counterelectrode (36) whose working surface (34) starts from a slide that can be adjusted parallel to the working surface of the sonotrode (16, 32), which slide for its part starts from a carrier (38) that can be adjusted vertically to the working surface of the sonotrode and that indirectly or directly laterally delimits the compression space (18), and wherein at least the working surface of the counterelectrode is provided with a structure formed by successive elevations (50, 52) and recesses (54, 56) running transversely to the longitudinal axis of the compression space, wherein at least one of the elevations (74) projects in the central area of the working surface above the other elevations in the direction of the sonotrode, wherein
the at least one elevation (74) running in the central area of the working surface (34) and starting from the free edge of the working surface of the counterelectrode, which edge runs in the longitudinal direction of the compression space, is shortened in its height over an area (78) by a length L in such a manner that the crown area of the shortened area facing the working surface of the sonotrode runs in or approximately in a plane or offset from the plane that is tensioned by the other elevations (50, 52), and that either the maximum width of the compression space is adjusted to the length of the area of the shortened elevation or a width is adjusted that is wider than the length is a function of the cross section of the conductors (104, 106, 110 , 112, 114, 116, 118) to be welded.

## Revendications

1. Dispositif de soudage par ultrasons destiné à souder des conducteurs électriques (104, 106, 110, 112, 114, 116, 118), tels que des fils toronnés, afin de réaliser un noeud (100, 102), ledit dispositif comprenant un espace de compression (18) pour recevoir les conducteurs, lequel est délimité d'une part côté périphérique par deux surfaces de travail (30, 34) limitant l'espace de compression sur deux faces opposées, et d'autre part par deux surfaces de délimitation latérales s'étendant transversalement aux surfaces de travail, espace dont les faces restantes sont ouvertes et dans lequel une des surfaces de travail est une section d'une sonotrode (16) du dispositif de soudage, qui peut être mise en vibration ultrasonore, et l'autre surface de travail est une section d'une contrélectrode (36), et dans laquelle au moins les surfaces de travail sont structurées, sachant que dans au moins une, de préférence dans les deux zones de sortie (58, 60) de l'espace de compression, la surface de travail de la contrélectrode présente une protubérance (62, 64) incurvée en coupe transversale, s'étendant en direction de la surface de travail de la sonotrode et transversalement à l'axe longitudinal (28) traversant les faces ouvertes de l'espace de compression,
**caractérisé en ce**
**que** la surface de travail (30) de la sonotrode (16) présente, dans sa zone s'étendant en prolongement de la protubérance (62, 64) de la contrélectrode (36) perpendiculairement au plan décrit par la surface de travail de la sonotrode, au moins un évidement (66, 68) s'étendant au moins par sections le long de la protubérance.

2. Dispositif selon la revendication 1,
**caractérisé en ce**
**qu'**au moins une limite (70, 72) de l'évidement (66, 68) s'étendant transversalement à l'axe longitudinal (28) de l'espace de compression (18) agit en tant que frein anti-glissement contre un déplacement axial des conducteurs (104, 106, 110. 112, 114, 116, 118) jouxtant ladite limite.

3. Dispositif selon la revendication 1 ou 2,
**caractérisé en ce**
**que** chacune des limites latérales (70, 72) de l'évidement (66, 68) agit en tant que frein anti-glissement.

4. Dispositif selon l'une des revendications précédentes,
**caractérisé en ce**
**que** l'évidement (66, 68) présente en coupe transversale une géométrie en forme de U, de demi-cercle ou de V.

5. Dispositif selon l'une des revendications précédentes,
**caractérisé en ce**
**que** dans la zone en prolongement de la protubérance (62, 64) en direction de la sonotrode (16) sont prévus au moins deux évidements s'étendant le long de la protubérance.

6. Dispositif selon l'une des revendications précédentes,
**caractérisé en ce**
**que** la largeur de la protubérance (62, 64) est supérieure à la largeur de l'évidement (66, 68), lesdites largeurs étant respectivement observées dans la direction de l'axe longitudinal de l'espace de compression (18).

7. Dispositif selon l'une des revendications précédentes,
**caractérisé en ce**
**que** lors du soudage des conducteurs, l'évidement (66, 68) s'étend le long de la zone médiane de la protubérance (62, 64).

8. Dispositif de soudage par ultrasons selon la revendication 1, dans lequel la surface de travail (34) de la contrélectrode (36) part d'un coulisseau déplaçable parallèlement à la surface de travail (30) de la sonotrode (32), lequel coulisseau part d'un support (38) qui est déplaçable perpendiculairement à la surface de travail de la sonotrode et délimite latéralement l'espace de compression (18) indirectement ou directement, sachant qu'au moins la surface de travail de la contrélectrode présente une structure qui est de préférence formée de protubérances (50, 52) et d'évidements (54, 56) successifs s'étendant transversalement à l'axe longitudinal de l'espace de compression, que dans la zone médiane de la surface de travail de la contrélectrode au moins une protubérance (74) fait saillie sur les autres protubérances ou, en l'absence de structure, sur la surface de travail en direction de la sonotrode, que l'au moins une protubérance (74) s'étendant dans la zone médiane et partant du bord libre de la surface de travail (34) de la contrélectrode (36) s'étendant dans le sens longitudinal de l'espace de compression, est raccourcie dans sa hauteur sur une zone (78) de telle manière que la partie sommitale (75) de la zone orientée vers la surface de travail (30) de la sonotrode (32) s'étend dans un plan ou approximativement dans un plan ou en retrait par rapport au plan décrit par les autres protubérances ou par la surface de travail en l'absence d'autres protubérances, sachant que la zone présente une longueur L, s'étendant transversalement à l'axe longitudinal (28) de l'espace de compression, qui est plus courte que les extensions possibles de la surface de travail transversalement à l'axe longitudinal de l'espace de compression.

9. Dispositif selon la revendication 8,
**caractérisé en ce**
**que** la longueur L est telle que 0,5 mm ≤ L ≤ 1,5 mm, en particulier L ≈ 1 mm.

10. Procédé de soudage de conducteurs électriques (104, 106, 110, 112, 114, 116, 118), tels que fils toronnés, pour réaliser un noeud dans un espace de compression (18) ajustable en hauteur et en largeur d'un dispositif de soudage par ultrasons, sachant que ledit espace de compression est délimité côté périphérique par deux surfaces de travail (30, 34) limitant l'espace de compression sur deux faces opposées et par deux surfaces de délimitation latérales s'étendant transversalement aux surfaces de travail, les faces restantes de l'espace de compression étant ouvertes, qu'une surface de travail est une section d'une sonotrode (16, 32) du dispositif de soudage par ultrasons, qui peut être mise en vibration ultrasonore et que l'autre surface de travail est une section d'une contrélectrode (36), et qu'au moins les surfaces de travail sont structurées, que dans au moins une zone de sortie (58, 60) de l'espace de compression dépasse de la surface de travail de la contrélectrode une protubérance (62, 64) incurvée en coupe transversale s'étendant transversalement à l'axe longitudinal de l'espace de compression et au moyen de laquelle est amplifié le soudage des conducteurs qui passent dans la zone de la protubérance,
**caractérisé en ce**
**que** les conducteurs se trouvant en face de la protubérance (62, 64) et reposant sur la sonotrode (16) ou s'étendant dans cette zone subissent un soudage plus faible en comparaison au soudage effectué au moins dans la zone médiane de l'espace de compression (18) et sont au moins assurés contre un glissement axial du fait que dans le prolongement de la protubérance en direction de la surface de travail (30) de la sonotrode (16, 32) est formé un évidement (66, 68) s'étendant au moins par sections dans la surface de travail de la sonotrode et le long de la protubérance, sachant qu'au moins une des limites (70, 72) s'étendant transversalement à l'axe longitudinal (28) de l'espace de compression freine au moins le glissement axial d'au moins les conducteurs appliqués sur la limite.

11. Procédé selon la revendication 10 utilisant une contrélectrode (36) dont la surface de travail (34) part d'un coulisseau déplaçable parallèlement à la surface de travail de la sonotrode (16, 32), lequel coulisseau part d'un support (38) qui est déplaçable perpendiculairement à la surface de travail de la sonotrode et délimite latéralement l'espace de compression (18) indirectement ou directement, sachant qu'au moins la surface de travail de la contrélectrode est munie d'une structure formée de protubérances (50, 52) et d'évidements (54, 56) successifs et s'étendant transversalement à l'axe longitudinal de l'espace de compression, que dans la zone médiane de la surface de travail fait saillie au moins une des protubérances (74) sur les autres en direction de la sonotrode, que l'au moins une protubérance (74) s'étendant dans la zone médiane de la surface de travail (34) et partant du bord libre de la surface de travail s'étendant dans le sens longitudinal de l'espace de compression, est raccourcie dans sa hauteur sur une zone (78) d'une longueur L perpendiculairement à l'axe longitudinal (28) de l'espace de compression (18) de telle manière que la partie sommitale de la zone raccourcie orientée vers la surface de travail de la sonotrode s'étend dans un plan ou approximativement dans un plan ou en retrait par rapport au plan décrit par les autres protubérances (50, 52), et qu'en fonction de la section transversale des conducteurs (104, 106, 110, 112, 114, 116, 118) devant être soudés, soit la largeur maximale de l'espace de compression est ajustée sur la longueur de la zone de la protubérance raccourcie, soit est ajustée une largeur plus grande que la longueur.
